# EUROPEAN PATENT APPLICATION

(11) **EP 4 465 480 A1**
(43) Date of publication of application: **20.11.2024**
(21) Application number: 23752987.0
(22) Date of filing: 14.02.2023
(51) Int. Cl.: H02J 7/02, B25F 5/00, H02J 7/00

(54) **CHARGING ADAPTER, CHARGER, CHARGING SYSTEM, AND METHOD FOR CHARGING BATTERY PACK**

(30) Priority: 14.02.2022 JP 2022020646
(71) Applicant: Makita Corporation, Anjo-shi Aichi 446-8502 (JP)
(72) Inventor: SAKAI, Mamoru, Anjo-shi, Aichi 446-8502 (JP); MIZUTANI, Masaya, Anjo-shi, Aichi 446-8502 (JP); ITO, Makoto, Anjo-shi, Aichi 446-8502 (JP)
(74) Representative: Kramer Barske Schmidtchen Patentanwälte PartG mbB
(86) International application number: PCT/JP2023/005030
(87) International publication number: WO 2023/153525

(57) **Abstract**

A charging adapter in one aspect of the present disclosure includes a first coupler, a second coupler, a power delivery path, a converter, a communication circuit, a charging control circuit, a control power supply, a first switch, a first internal path, a second internal path, a second switch, and a starter circuit. The charging control circuit performs a charging control of a battery pack based on a state of the battery pack coupled to the second coupler, first power delivery information, and/or second power delivery information. The charging control includes switching the converter to a first state or a second state. The converter in the first state receives a DC voltage from a power delivery adapter through the first coupler, converts the DC voltage into a charging voltage for charging the battery pack, and outputs the charging voltage to the second coupler. The converter in the second state receives the DC voltage from the power delivery adapter through the first coupler and outputs the DC voltage to the second coupler.

## Description

### CROSS-REFERENCE TO RELATED APPLICATION

This international application claims the benefit of Japanese Patent Application No. 2022-020646 filed on February 14, 2022, with the Japan Patent Office, and the entire disclosure of Japanese Patent Application No. 2022-020646 is incorporated herein by reference.

### TECHNICAL FIELD

The present disclosure relates to the charging of a battery pack.

### BACKGROUND ART

The Patent Document 1 identified below discloses a charger configured to output a charging voltage to a battery pack. In this charger, a specified input voltage is input into an inputter of the charger, and a converter provided inside the charger converts the input voltage into a charging voltage suitable for charging the battery pack, and an outputter of the charger outputs the charging voltage.

### PRIOR ART DOCUMENT

### PATENT DOCUMENT

Patent Document 1: Japanese Unexamined Patent Application Publication No. 2021-044888

### SUMMARY OF THE INVENTION

### PROBLEMS TO BE SOLVED BY THE INVENTION

The output voltage of a battery pack can vary depending on the type/model of the battery pack. Generally, chargers are configured to charge one corresponding type of battery packs and output fixed charging voltages.

When charging two or more types of battery packs, two or more types of chargers have to be prepared for the respective types of battery packs, which increases user's burden associated with the preparation of the chargers.

It is preferable that one aspect of the present disclosure can reduce the workload required for a user to charge two or more types of battery packs.

### MEANS FOR SOLVING THE PROBLEMS

One aspect of the present disclosure provides a charging adapter including a first coupler, a second coupler, a power delivery path, a converter, a communication circuit, a charging control circuit, a control power supply, a first switch, a first internal path, a second internal path, a second switch, and a starter circuit. The first coupler is detachably coupled to a power delivery adapter and receives a DC voltage from the power delivery adapter in accordance with a Universal Serial Bus-Power Delivery (USB-PD) standard (USB is a registered trademark). The second coupler is detachably coupled to a battery pack. The battery pack is configured to be detachably coupled to a job-site electric appliance. The power delivery path is configured to electrically couple the first coupler to the second coupler. The converter is on the power delivery path and is configured to be switched to a first state or a second state. The converter in the first state receives the DC voltage from the power delivery adapter through the first coupler, converts the DC voltage into a charging voltage for charging the battery pack, and outputs the charging voltage to the second coupler. The converter in the second state receives the DC voltage from the power delivery adapter through the first coupler and outputs the DC voltage to the second coupler. The communication circuit transmits first power delivery information to the power delivery adapter and receives the second power delivery information from the power delivery adapter. The first power delivery information indicates a required power delivery capability for the charging adapter. The second power delivery information indicates an actual power delivery capability of the power delivery adapter. The charging control circuit performs a charging control of the battery pack based on a state of the battery pack coupled to the second coupler, the first power delivery information, and/or the second power delivery information. The charging control includes switching the converter to the first state or the second state.

The control power supply converts the DC voltage into an internal voltage to be delivered to an inside of the charging adapter. The first switch is between the first coupler and the converter on the power delivery path and is configured to be switched to its conductive state or its interrupted state. The first switch in its conductive state completes the power delivery path. The first switch in its interrupted state interrupts the power delivery path. The first internal path is electrically coupled between the first switch and the converter on the power delivery path and configured to electrically couple the power delivery path to the control power supply. The second internal path is configured to electrically couple the first coupler to the control power supply. The second switch is on the second internal path and configured to be switched to its conductive state or its interrupted state. The second switch in its conductive state completes the second internal path. The second switch in its interrupted state interrupts the second internal path. The starter circuit switches the first switch or the second switch to its conductive state based on the first coupler being coupled to the power delivery adapter.

Such a charging adapter can output the charging voltage suitable for charging the battery pack by the converter. When the magnitude of the DC voltage is set not continuously but discretely, there is a possibility that the DC voltage cannot be set to a magnitude compatible with the battery pack. In this case, the charging adapter can charge the battery pack by converting the DC voltage into the charging voltage compatible with the battery pack using the converter.

A user can charge two or more types of battery packs having distinct voltages suitable for charging by preparing two or more types of charging adapters that output distinct charging voltages. In this case, it is possible to charge different types of battery packs by replacing the charging adapter coupled to the same power delivery adapter. Thus, preparing two or more types of charging adapters for two or more types of battery packs reduces the user's burden in comparison with a case where two or more types of power delivery adapters or two or more types of chargers are prepared for two or more types of battery packs. Therefore, the charging adapter can reduce the workload required for the user to charge two or more types of battery packs.

Furthermore, such a charging adapter can deliver the DC voltage to the converter or the control power supply by switching the first switch or the second switch to its conductive state.

Another aspect of the present disclosure provides a charger including a charging adapter and a power delivery adapter. The power delivery adapter is detachably coupled to the charging adapter, receives the first power delivery information from the charging adapter, and outputs the DC voltage corresponding to the required power delivery capability indicated by the first power delivery information.

Such a charger can reduce the workload required for a user to charge two or more types of battery packs.

Still another aspect of the present disclosure provides a charging system including a first charging adapter, a second charging adapter, and a power delivery adapter. The first charging adapter includes the above-described charging adapter and outputs a first charging voltage for charging a first battery pack. The second charging adapter includes the above-described charging adapter, is distinct from the first charging adapter, and outputs a second charging voltage for charging a second battery pack. The second charging voltage is distinct from the first charging voltage. The power delivery adapter is coupled alternatively to the first charging adapter or the second charging adapter, receives the first power delivery information from either the first charging adapter or the second charging adapter that is coupled to the power delivery adapter, and outputs, to either the first charging adapter or the second charging adapter that is coupled to the power delivery adapter, the DC voltage corresponding to the required power delivery capability indicated by the first power delivery information received.

In such a charging system, when a user needs to charge the first battery pack, the user can charge the first battery pack by coupling the first charging adapter to the power delivery adapter. When the user needs to charge the second battery pack, the user can charge the second battery pack by coupling the second charging adapter to the power delivery adapter.

Therefore, the charging system can reduce the workload required for the user to charge two or more types of battery packs.

Still another aspect of the present disclosure provides a method for charging a battery pack. The method includes:
electrically coupling the battery pack to a power delivery adapter through a charging adapter;
delivering a DC voltage from the power delivery adapter to the charging adapter in accordance with a USB-PD standard, the charging adapter including a converter configured to be switched to a first state or a second state, the converter in the first state being configured (i) to convert the DC voltage into a charging voltage for charging the battery pack and (ii) to output the charging voltage to the battery pack, the converter in the second state being configured to output the DC voltage to the battery pack;
transmitting first power delivery information from the charging adapter to the power delivery adapter, the first power delivery information indicating a required power delivery capability for the charging adapter;
transmitting second power delivery information from the power delivery adapter to the charging adapter, the second power delivery information indicating an actual power delivery capability of the power delivery adapter; and
switching the converter to the first state or the second state based on a state of the battery pack, the first power delivery information, and/or the second power delivery information.

Such a method can reduce the workload required for a user to charge two or more types of battery packs.

### BRIEF DESCRIPTION OF THE DRAWINGS

FIG. 1 is a block diagram showing an overall configuration of a charger in a first embodiment.
FIG. 2 shows a part of a flowchart of a charging process.
FIG. 3 shows the rest of the flowchart of the charging process.
FIG. 4 is a block diagram showing an overall configuration of a charging system in a second embodiment.

### EXPLANATION OF REFERENCE NUMERALS

1...charger, 1a...first charger, 1b...second charger, 3...power delivery adapter, 5...charging adapter, 5a...first charging adapter, 5b...second charging adapter, 8...battery pack, 8a...first battery pack, 8b...second battery pack, 32...electric power inputter, 33...electric power outputter, 35...AC/DC converter, 36...power delivery control integrated circuit, 52...adapter coupler, 52a...first adapter terminal, 52b...second adapter terminal, 53...battery coupler, 54...notifier, 61...first switch, 62...second switch, 63...charging control integrated circuit, 64...control power supply, 68...microcontroller unit, 69...load switch, 70...first battery interface, 71...DC/DC converter, 83a...first battery cell, 83b...second battery cell, 85...pack coupler, 101...charging system, L1...first power delivery path, L2...second power delivery path, L3...third power delivery path

### MODE FOR CARRYING OUT THE INVENTION

### 1. Overview of Embodiments

One embodiment may provide a charging adapter including at least any one of the following features 1 through 26:
- Feature 1: a first coupler configured (i) to be detachably coupled to a power delivery adapter and (ii) to receive a DC voltage from the power delivery adapter in accordance with a USB-PD standard;
- Feature 2: a second coupler configured to be detachably coupled to a battery pack;
- Feature 3: the battery pack is configured to be detachably coupled to a job-site electric appliance;
- Feature 4: a power delivery path configured to electrically couple the first coupler to the second coupler;
- Feature 5: a converter (i) on the power delivery path and (ii) configured to be switched to a first state or a second state;
- Feature 6: the converter in the first state is configured to receive the DC voltage from the power delivery adapter through the first coupler;
- Feature 7: the converter in the first state is configured to convert the DC voltage into a charging voltage for charging the battery pack;
- Feature 8: the converter in the first state is configured to output the charging voltage to the second coupler;
- Feature 9: the converter in the second state is configured to receive the DC voltage from the power delivery adapter through the first coupler;
- Feature 10: the converter in the second state is configured to output the DC voltage to the second coupler;
- Feature 11: a transmission circuit configured to transmit first power delivery information to the power delivery adapter;
- Feature 12: the first power delivery information indicates a required power delivery capability for the charging adapter;
- Feature 13: a communication circuit configured to receive second power delivery information from the power delivery adapter; - Feature 14: the second power delivery information indicates an actual power delivery capability of the power delivery adapter;
- Feature 15: a charging control circuit configured to perform a charging control of the battery pack based on a state of the battery pack coupled to the second coupler, the first power delivery information, and/or the second power delivery information;
- Feature 16: the charging control includes switching the converter to the first state or the second state;
- Feature 17: a control power supply configured to convert the DC voltage into an internal voltage to be delivered to an inside (or an internal circuit) of the charging adapter;
- Feature 18: a first switch (i) between the first coupler and the converter on the power delivery path and (ii) configured to be switched to its conductive state or its interrupted state;
- Feature 19: the first switch in its conductive state is configured to complete the power delivery path;
- Feature 20: the first switch in its interrupted state is configured to interrupt the power delivery path;
- Feature 21: a first internal path (i) electrically coupled between the first switch and the converter on the power delivery path and (ii) configured to electrically couple the power delivery path to the control power supply;
- Feature 22: a second internal path configured to electrically couple the first coupler to the control power supply;
- Feature 23: a second switch (i) on the second internal path and (ii) configured to be switched to its conductive state or its interrupted state;
- Feature 24: the second switch in its conductive state is configured to complete the second internal path;
- Feature 25: the second switch in its interrupted state is configured to interrupt the second internal path; and
- Feature 26: a starter circuit configured to switch the first switch or the second switch to its conductive state based on the first coupler being coupled to the power delivery adapter.

The charging adapter including at least features 1, 2, and 4 through 26 can output the charging voltage suitable for charging the battery pack by the converter. When the magnitude of the DC voltage is discretely set in accordance with the USB-PD standard and the DC voltage cannot be set to a magnitude compatible with the battery pack, this charging adapter can charge the battery pack with the charging voltage.

A user can charge two or more types of battery packs having distinct voltages suitable for charging by preparing two or more types of charging adapters that output distinct charging voltages. In this case, it is possible to charge different types of battery packs by replacing the charging adapter coupled to the same power delivery adapter. Thus, preparing two or more types of charging adapters for two or more types of battery packs reduces the user's burden in comparison with a case where two or more types of power delivery adapters or two or more types of chargers are prepared for two or more types of battery packs. Thus, the charging adapter including at least features 1, 2, and 4 through 26 can reduce the workload required for the user to charge two or more types of battery packs.

Furthermore, such a charging adapter can deliver the DC voltage to the converter or the control power supply by switching the first switch or the second switch to its conductive state.

In one embodiment, the charging control may include controlling the charging voltage to be delivered to the battery pack and/or controlling the DC voltage to be output from the power delivery adapter.

One embodiment may include, in addition to or in place of at least any one of the features 1 through 26, at least any one of the following features 27 and 28:
- Feature 27: the starter circuit is configured to switch the first switch to its conductive state and to switch the second switch to its interrupted state based on the power delivery adapter being compatible with the charging adapter; and
- Feature 28: the starter circuit is configured to switch the first switch to its interrupted state and to switch the second switch to its conductive state based on the power delivery adapter being incompatible with the charging adapter.

In the charging adapter including at least the features 1, 2, and 4 through 28, (i) the DC voltage is delivered to both the converter and the control power supply based on the power delivery adapter being compatible with the charging adapter, and (ii) the DC voltage is delivered not to the converter but to the control power supply based on the power delivery adapter being incompatible with the charging adapter. Such a charging adapter allows the control power supply to deliver an electric power to the inside of the charging adapter while reducing damage to the charging adapter caused by an inappropriate DC voltage. The charging adapter can perform a specified operation with the electric power delivered from the control power supply. For example, when the electric power delivered from the power delivery adapter is insufficient to charge the battery pack, the charging adapter can notify the user that the battery pack cannot be charged due to the insufficient electric power.

One embodiment may include, in addition to or in place of at least any one of the features 1 through 28, the following feature 29:
- Feature 29: the first power delivery information includes a magnitude of the DC voltage and/or a magnitude of an electric current to be output from the power delivery adapter.

The charging adapter including at least the features 1, 2, 4 through 26, and 29 can control the magnitude of the DC voltage and/or the magnitude of the electric current in accordance with the type of the battery pack.

One embodiment may include, in addition to or in place of at least any one of the features 1 through 29, at least any one of the following features 30 through 36:
- Feature 30: a path switch (i) between the converter and the second coupler on the power delivery path and (ii) configured to be switched to its conductive state or its interrupted state;
- Feature 31: the path switch in its conductive state is configured to complete the power delivery path;
- Feature 32: the path switch in its interrupted state is configured to interrupt the power delivery path;
- Feature 33: a switching control circuit configured to switch the path switch to its conductive state based on a first switching condition being satisfied;
- Feature 34: the first switching condition is satisfied in response to (i) the actual power delivery capability of the power delivery adapter coupled to the first coupler fulfilling the required power delivery capability and (ii) the battery pack coupled to the second coupler being chargeable;
- Feature 35: a switching control circuit configured to switch the path switch to its interrupted state based on a second switching condition being satisfied; and
- Feature 36: the second switching condition is satisfied in response to (i) the actual power delivery capability of the power delivery adapter coupled to the first coupler not fulfilling the required power delivery capability and/or (ii) the battery pack coupled to the second coupler being unchargeable.

The charging adapter including at least the features 1, 2, 4 through 26, and 30 through 36 can inhibit the battery pack from being charged by the power delivery adapter that is not suitable for charging the battery pack. This allows the charging adapter to inhibit the battery pack from being damaged due to the power delivery adapter that is not suitable for charging.

One embodiment may include, in addition to or in place of at least any one of the features 1 through 36, the following feature 37:
- Feature 37: a state monitoring circuit configured to monitor a state of the battery pack.

One embodiment may include, in addition to or in place of at least any one of the features 1 through 37, at least any one of the following features 38 through 41:
- Feature 38: the state monitoring circuit is configured to switch the path switch to its interrupted state based on a forced-off condition predefined being satisfied;
- Feature 39: the state monitoring circuit is configured to switch the path switch to its conductive state based on the forced-off condition not being satisfied;
- Feature 40: the path switch is configured to be switched to its interrupted state in response to the switching control circuit and/or the state monitoring circuit having switched the path switch to its interrupted state; and
- Feature 41: the path switch is configured to be switched to its conductive state in response to both the switching control circuit and the state monitoring circuit having switched the path switch to its conductive state.

In the charging adapter including at least the features 1, 2, 4 through 26, and 30 through 41, in addition to the switching control circuit, the state monitoring circuit can also switch the path switch to its interrupted state. In such a charging adapter, even if some anomalies occur in the switching control circuit, the state monitoring circuit can switch the path switch to its interrupted state, thereby inhibiting the unnecessary electric power from being delivered to the battery pack.

The predefined forced-off condition may be satisfied in response to the battery pack being anomalous. In this case, the path switch is switched to its interrupted state in response to the battery pack being anomalous. Thus, this charging adapter can inhibit a continuous charging of an anomalous battery pack and inhibit the occurrence of malfunctions caused by the continuous charging.

More specifically, for example, the predefined forced-off condition may be satisfied in response to the temperature of the battery pack exceeding a predefined temperature threshold.

One embodiment may include, in addition to or in place of at least any one of the features 1 through 41, the following feature 42:
- Feature 42: the switching control circuit is configured to switch the path switch to its interrupted state based on a first condition being satisfied.

The charging adapter including at least the features 1, 2, 4 through 26, 30 through 36, and 42 can inhibit the battery pack from being damaged due to a continuous output of the charging voltage to the battery pack.

One embodiment may include, in addition to or in place of at least any one of the features 1 through 42, the following feature 43:
- Feature 43: the first condition is satisfied in response to the battery pack having been charged to 100% of a charging capacity of the battery pack or the battery pack being unchargeable.

The charging adapter including at least the features 1, 2, 4 through 26, 30 through 36, 42, and 43 (i) can stop outputting the charging voltage in response to a charging of the battery pack being completed or (ii) can stop outputting the charging voltage in response to the battery pack becoming unchargeable (e.g., because the battery pack is anomalous).

One embodiment may include, in addition to or in place of at least any one of the features 1 through 43, the following feature 44:
- Feature 44: the charging control circuit is configured to set, based on the first condition being satisfied, the first power delivery information such that the DC voltage reaches a minimum DC voltage selectable in the power delivery adapter.

The charging adapter including at least the features 1, 2, 4 through 26, 30 through 36, 42, and 44 can cause (or reduce) the DC voltage to reach the minimum DC voltage in response to the first condition being satisfied to thereby reduce unnecessary power consumption.

One embodiment may include, in addition to or in place of at least any one of the features 1 through 44, the following feature 45:
- Feature 45: the charging control circuit is configured to set, based on the battery pack not being coupled to the second coupler, the first power delivery information such that the DC voltage reaches a minimum DC voltage selectable in the power delivery adapter.

The charging adapter including at least the features 1, 2, 4 through 26, 30 through 36, 42, and 45 can cause (or decrease) the DC voltage to reach the minimum DC voltage, when the battery pack is not coupled to the second coupler, to thereby reduce unnecessary power consumption.

One embodiment may include, in addition to or in place of at least any one of the features 1 through 45, the following feature 46:
- Feature 46: the charging control circuit is configured to perform the charging control in accordance with the state of the battery pack, based on (i) the charging adapter delivering the charging voltage to the battery pack and (ii) the state of the battery pack having changed.

The charging adapter including at least the features 1, 2, 4 through 26, and 46 can vary the DC voltage to be output from the power delivery adapter in response to the state of the battery pack having changed. The state of the battery pack includes a proper state and an anomalous state of the battery pack. The proper state includes a state in which the battery pack is chargeable. The anomalous state includes a state in which the battery pack is unchargeable. Unnecessary power consumption in the charging of the battery pack can be reduced by performing the charging control corresponding to the anomalous state in response to the state of the battery pack having changed to the anomalous state.

One embodiment may include, in addition to or in place of at least any one of the features 1 through 46, the following feature 47:
- Feature 47: the first coupler is in the form of a USB Type-C connector.

The charging adapter including at least the features 1, 2, 4 through 26, and 47 can be detachably coupled to the power delivery adapter through the USB Type-C connector. Examples of the USB Type-C connector include a USB Type-C port, a USB Type-C plug, and a USB Type-C receptacle.

One embodiment may include, in addition to or in place of at least any one of the features 1 through 47, the following feature 48:
- Feature 48: the battery pack includes an output terminal configured to transmit information of the battery pack to the job-site electric appliance, and/or a first battery cell and a second battery cell coupled in series or in parallel with each other.

The information may be transmitted through the output terminal in a digital format or an analog format. The digital format may include a serial format and a parallel communication. In the digital format, the information of the battery pack may be transmitted in the form of a digital value based on a specified communication protocol. In the analog format, the information of the battery pack may be transmitted in the form of an analog value. Examples of the analog value include a voltage value and an electric current value.

In one embodiment, the charging adapter may be configured to transmit the first power delivery information to the power delivery adapter in accordance with any standard for delivering electric power through a USB connector. Additionally/alternatively, the first coupler may receive the DC voltage in accordance with the any standard. Examples of the any standard include a standard in which a magnitude of the DC voltage output from the power delivery adapter can be varied by the charging adapter.

One embodiment may provide a charger including at least any one of the following features 49 and 50:
- Feature 49: the charging adapter including at least the features 1, 2, and 4 through 26;
- Feature 50: a power delivery adapter configured (i) to be detachably coupled to the charging adapter, (ii) to receive the first power delivery information from the charging adapter, and (iii) to output the DC voltage corresponding to the required power delivery capability indicated by the first power delivery information.

In the charger including at least the features 49 and 50, the charging voltage corresponding to the type of the battery pack to be charged can be output to the battery pack by coupling the charging adapter compatible with the type of the battery pack to the power delivery adapter. That is, the user can charge two or more types of battery packs by preparing two or more types of charging adapters for two or more types of battery packs. In addition, in such a charger, the magnitude of the DC voltage can be varied in response to the state of the battery pack having changed. Thus, in response to the battery pack being in an anomalous state, the charger can perform the charging control corresponding to the anomalous state to thereby reduce unnecessary power consumption in the charging of the battery pack.

One embodiment may include, in addition to or in place of at least any one of the features 49 and 50, at least any one of the following features 51 through 53:
- Feature 51: the power delivery adapter includes a voltage generation circuit configured to generate the DC voltage;
- Feature 52: the power delivery adapter includes a power delivery control circuit configured (i) to receive the first power delivery information transmitted from the charging adapter and (ii) to control the voltage generation circuit so as to generate the DC voltage corresponding to the required power delivery capability indicated by the first power delivery information; and
- Feature 53: the power delivery adapter includes a voltage output circuit configured (i) to be detachably coupled to the first coupler of the charging adapter and (ii) to output the DC voltage.

In the charger including at least the features 49 through 53, the power delivery adapter can output, to the charging adapter, the DC voltage corresponding to the first power delivery information transmitted from the charging adapter. That is, the power delivery adapter can output, to the charging adapter, the DC voltage corresponding to the type of the battery pack to be charged. Thus, this charger can reduce, by varying the DC voltage according to the type of the battery pack to be charged, unnecessary power consumption in the charger in the charging of this battery pack.

One embodiment may provide a charging system including at least any one of the following features 54 through 57:
- Feature 54: a first charging adapter (i) including the charging adapter provided with at least the features 1, 2, 4 through 26 and (ii) configured to output a first charging voltage for charging a first battery pack;
- Feature 55: a second charging adapter (i) including the charging adapter provided with at least the features 1, 2, 4 through 26, (ii) distinct from the first charging adapter, and (iii) configured to output a second charging voltage for charging a second battery pack;
- Feature 56: the second charging voltage is distinct from the first charging voltage; and
- Feature 57: a power delivery adapter configured (i) to be coupled alternatively to the first charging adapter or the second charging adapter, (ii) to receive the first power delivery information from either the first charging adapter or the second charging adapter that is coupled to the power delivery adapter, and (iii) to output, to either the first charging adapter or the second charging adapter that is coupled to the power delivery adapter, a DC voltage corresponding to the required power delivery capability indicated by the first power delivery information received.

The charging system including at least the features 54 through 57 can vary the charging voltage to be output from the charging system between the first charging voltage and the second charging voltage by replacing the first charging adapter with the second charging adapter, and vice versa, as the charging adapter coupled to the power delivery adapter. Such a charging system can charge not only the first battery pack compatible with the first charging adapter, but also the second battery pack compatible with the second charging adapter. That is, the user can charge two or more types of battery packs by simply replacing the first charging adapter with the second charging adapter, and vice versa, as the charging adapter coupled to the power delivery adapter. Therefore, the charging system can reduce the workload required for the user to charge two or more types of battery packs.

In one embodiment, the transmission circuit, the charging control circuit, the switching control circuit, the starter circuit, and/or the power delivery control circuit may include a microcomputer, or may include, in place of or in addition to the microcomputer, a combination of electronic components such as discrete devices, an Application Specified Integrated Circuit (ASIC), an Application Specific Standard Product (ASSP), a programmable logic device such as a Field Programmable Gate Array (FPGA), or a combination thereof.

One embodiment may provide a method for charging a battery pack, and the method may include at least any one of the following features 58 through 67:
- Feature 58: electrically coupling the battery pack to a power delivery adapter through a charging adapter;
- Feature 59: delivering a DC voltage from the power delivery adapter to the charging adapter in accordance with a USB-PD standard;
- Feature 60: the charging adapter includes a converter configured to be switched to a first state or a second state;
- Feature 61: the converter in the first state is configured (i) to convert the DC voltage into a charging voltage for charging the battery pack and (ii) to output the charging voltage to the battery pack;
- Feature 62: the converter in the second state is configured to output the DC voltage to the battery pack;
- Feature 63: transmitting a first power delivery information from the charging adapter to the power delivery adapter;
- Feature 64: the first power delivery information indicates a required power delivery capability for the charging adapter;
- Feature 65: transmitting a second power delivery information from the power delivery adapter to the charging adapter;
- Feature 66: the second power delivery information indicates an actual power delivery capability of the power delivery adapter; and
- Feature 67: switching the converter to the first state or the second state based on a state of the battery pack, the first power delivery information, and/or the second power delivery information.

The method including at least the features 58 through 67 can reduce the workload required for a user to charge two or more types of battery packs.

Examples of the job-site electric appliance include any types of electric appliances that are used at job sites, for example, of do-it-yourself carpentry, manufacturing, gardening, and construction. Specifically, examples of the job-site electric appliance include any electric power tool for masonry work, metalworking, or woodworking, any electric gardening equipment, and electric appliances for preparing an environment of a job site. More specifically, examples of the job-site electric appliance include an electric blower, an electric hammer, an electric hammer drill, an electric drill, an electric driver, an electric wrench, an electric grinder, an electric circular saw, an electric reciprocating saw, an electric jig saw, an electric cutter, an electric chain saw, an electric planer, an electric nailer (including a tacker), an electric hedge trimmer, an electric lawn mower, an electric lawn trimmer, an electric bush cutter, an electric cleaner, an electric sprayer, an electric spreader, an electric dust collector, a laser range finder (or a laser distance measuring equipment), a laser marking device, a beam receiver of a laser marking device, a wall scanner, a radio, a television, a speaker, an electric hot/cool storage, an electric kettle, a coffee machine (or a coffee maker or a coffee distiller), a battery-operated wheel barrow, a battery-operated bicycle, a fan best, and a heating jacket.

In one embodiment, the features 1 through 67 may be combined in any combination.

In one embodiment, any of the features 1 through 67 may be excluded.

### 2. Specific Example Embodiment

Hereinafter, specific example embodiments of the present disclosure are described with reference to the drawings.

### 2-1. First Embodiment

### 2-1-1. Overall Configuration

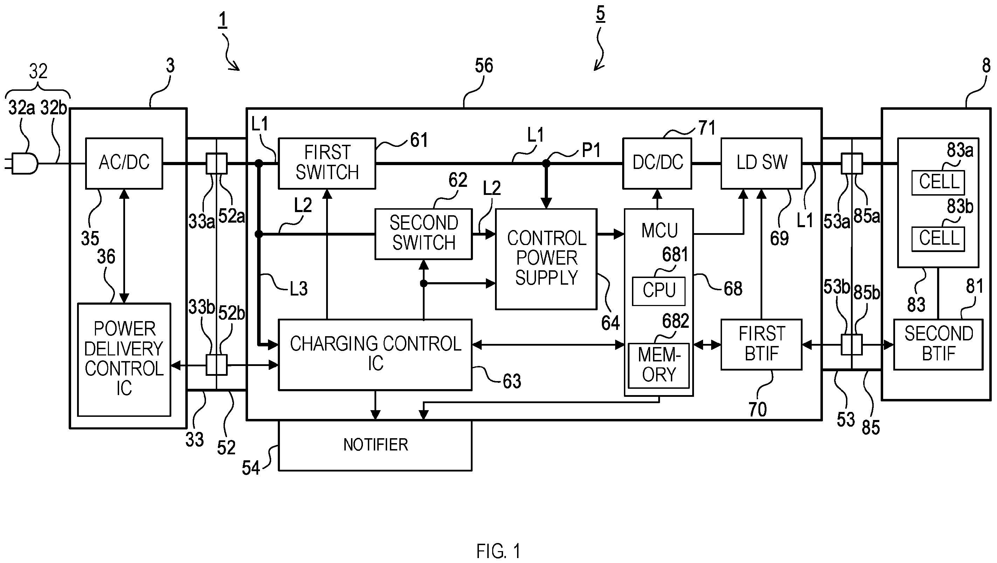

As shown in FIG. 1, a charger 1 of a first embodiment is configured to charge a battery pack 8. The charger 1 includes a power delivery adapter 3 and a charging adapter 5.

The power delivery adapter 3 is configured to be detachably coupled to the charging adapter 5.

The battery pack 8 is configured to be detachably coupled to a job-site electric appliance that is not shown. The battery pack 8 is configured to deliver DC power to the job-site electric appliance. The battery pack 8 may include a specific attach/detach structure and a terminal shape depending on the type of job-site electric appliance to be coupled. The job-site electric appliance in the first embodiment may be an electric drill, for example.

### 2-1-2. Power Delivery Adapter

The power delivery adapter 3 includes an electric power inputter 32, an electric power outputter 33, an AC/DC converter 35, and a power delivery control integrated circuit (IC) 36.

The electric power inputter 32 includes an AC plug 32a and a cable 32b. The AC plug 32a is configured to be capable of coupling to an AC power supply that is not shown. The cable 32b is configured to transmit first electric power PW1 delivered from the AC power supply. The first electric power PW1 is AC power including an AC voltage and an AC current. That is, the electric power inputter 32 is configured to receive the first electric power PW1 from the AC power supply. The AC power supply may be a commercial power supply. For example, the first electric power PW1 may be 100-volt AC power.

The electric power outputter 33 is configured to output second electric power PW2 described below. The second electric power PW2 is DC power including a DC voltage and a DC current. The electric power outputter 33 is configured to be detachably coupled to the charging adapter 5. The electric power outputter 33 includes an electric power terminal 33a and a signal terminal 33b. The electric power terminal 33a is electrically coupled to the AC/DC converter 35. The signal terminal 33b is electrically coupled to the power delivery control IC 36. The electric power outputter 33 conforms to any standard for delivering electric power through a USB connector, and may be a USB Type-C connector, for example, in accordance with the Universal Serial Bus-Power Delivery (USB-PD) standard. USB is a registered trademark. The USB Type-C connector may include a CC terminal that is not shown. The USB Type-C connector may be any of a USB Type-C port, a USB Type-C plug, or a USB Type-C receptacle.

The AC/DC converter 35 receives the first electric power PW1. The AC/DC converter 35 converts the first electric power PW1 into the second electric power PW2. The second electric power PW2 is output to the charging adapter 5 through the electric power outputter 33.

The power delivery control IC 36 at least achieves a function as the source side in the USB-PD standard. The power delivery control IC 36 performs a negotiation with a device coupled to the electric power outputter 33 in accordance with the USB-PD standard. When the electric power outputter 33 is coupled to the charging adapter 5, the power delivery control IC 36 performs the negotiation with the charging adapter 5.

The power delivery control IC 36 determines a supplied power to the charging adapter 5 through the negotiation. The power delivery control IC 36 sets an output voltage of the AC/DC converter 35 (i.e., the voltage of the second electric power PW2) in accordance with the determined supply power. The voltage value of the second electric power PW2 corresponds to a power-supply voltage value of the charging adapter 5. The power-supply voltage of the charging adapter 5 corresponds to a voltage required for the charging adapter 5 to operate. Note that the voltage value of the second electric power PW2 before the negotiation is set to a default value. The default value here is the lowest voltage (e.g., 5 volts) among the selectable voltages defined in the USB-PD standard. The DC voltage that can be set in accordance with the USB-PD standard in the power delivery adapter 3 is not a continuous voltage value, but a discrete voltage value. The discrete voltage values that can be set for the DC voltage of the power delivery adapter 3 include, for example, a voltage value of 5, 9, 12, 15 and 20 volts.

The power delivery adapter 3 is configured to output the second electric power PW2 corresponding to a control value (a control value Pc of the second electric power PW2 described below) based on information (a charging setting information Si described below) transmitted from the charging adapter 5.

### 2-1-3. Charging Adapter

The charging adapter 5 includes an adapter coupler 52, a battery coupler 53, a notifier 54, and a circuit section 56.

The adapter coupler 52 is configured to be detachably coupled to the electric power outputter 33 of the power delivery adapter 3. The adapter coupler 52 is configured to receive the second electric power PW2 output from the power delivery adapter 3. The adapter coupler 52 includes a first adapter terminal 52a and a second adapter terminal 52b. In response to the adapter coupler 52 being coupled to the electric power outputter 33, the first adapter terminal 52a is electrically coupled to the electric power terminal 33a, and the second adapter terminal 52b is electrically coupled to the signal terminal 33b. The adapter coupler 52 may be, for example, a USB Type-C connector in accordance with the USB-PD standard. The USB Type-C connector may include a CC terminal that is not shown.

The battery coupler 53 is configured to be detachably coupled to the battery pack 8. The battery coupler 53 is configured to deliver, to the battery pack 8, a DC voltage of charging electric power PWb for charging the battery pack 8. The DC voltage of the charging electric power PWb corresponds to a DC voltage obtained by converting the DC voltage of the second electric power PW2. In other words, the battery coupler 53 outputs, to the battery pack 8, the DC voltage of the charging electric power PWb obtained by voltage-converting the DC voltage of the second electric power PW2. The battery coupler 53 includes a first connection terminal 53a and a second connection terminal 53b.

The circuit section 56 includes a first switch (SW) 61, a second SW 62, a charging control integrated circuit (IC) 63, and a control power supply 64. In addition, the circuit section 56 includes a microcontroller unit (MCU) 68, a load switch (LDSW) 69, a first battery interface (BTIF) 70, and a DC/DC converter 71. In addition, the circuit section 56 includes a first power delivery path L1, a second power delivery path L2, and a third power delivery path L3.

The first power delivery path L1, the second power delivery path L2, and the third power delivery path L3 are each electrically coupled to the first adapter terminal 52a. The charging control IC 63 is electrically coupled to the second adapter terminal 52b. The first power delivery path L1 is electrically coupled to the first connection terminal 53a. The first BTIF 70 is electrically coupled to the second connection terminal 53b.

The first power delivery path L1 includes an electrical path extending from the adapter coupler 52 through the first SW 61, the DC/DC converter 71, and the LDSW 69 to the battery coupler 53. The first power delivery path L1 electrically couples the adapter coupler 52 to the battery coupler 53. In other words, the first power delivery path L1 transmits, to the DC/DC converter 71, the DC voltage of the second electric power PW2 received from the power delivery adapter 3 through the adapter coupler 52.

The DC/DC converter 71 receives the second electric power PW2. The DC/DC converter 71 converts the second electric power PW2 into the charging electric power PWb. In detail, the DC/DC converter 71 converts the DC voltage of the second electric power PW2 into the DC voltage of the charging electric power PWb. The DC voltage of the charging electric power PWb corresponds to a voltage for charging the battery pack 8. The DC/DC converter 71 is arranged on the first power delivery path L1, and enables (or performs) or disables (or stops) the conversion from the DC voltage of the second electric power PW2 into the DC voltage of the charging electric power PWb in accordance with a command from the charging control IC 63. That is, the charging control IC 63 outputs an enabling command (or a conversion executing command) or a disabling command (or a conversion stopping command) to the DC/DC converter 71. The charging control IC 63 performs the charging control of the battery pack 8 accordingly.

Note that the charging control IC 63 may output, to the DC/DC converter 71, a command for specifying a charging voltage value and/or a charging current value. The DC/DC converter 71 may perform a feedback control so as to output a DC voltage and/or a DC current corresponding to the charging voltage value and/or the charging current value based on the command received from the charging control IC 63.

Furthermore, the first power delivery path L1 is electrically couples the DC/DC converter 71 to the battery coupler 53 so as to transmit the DC voltage of the charging electric power PWb output from the DC/DC converter 71 to the battery pack 8 through the battery coupler 53. The first power delivery path L1 includes an electrical path branching from a node P1 between the first SW 61 and the DC/DC converter 71 to the control power supply 64. This electrical path electrically couples the adapter coupler 52 to the control power supply 64.

The first SW 61 is arranged on the first power delivery path L1 and completes or interrupts the first power delivery path L1 in response to the first SW 61 turned ON or OFF in accordance with a command from the charging control IC 63. In detail, in response to the first SW 61 turned ON, the adapter coupler 52 is electrically coupled to each of the DC/DC converter 71 and the control power supply 64 through the first power delivery path L1. In response to the first SW 61 turned OFF, the adapter coupler 52 is electrically decoupled from each of the DC/DC converter 71 and the control power supply 64 on the first power delivery path L1.

The LDSW 69 is disposed on the first power delivery path L1 and switched to ON (i.e., its conductive state) or OFF (i.e., its interrupted state). The LDSW 69 completes or interrupts the first power delivery path L1 in response to the LDSW 69 turned ON or OFF in accordance with a command from the MCU 68. In detail, in response to the LDSW 69 turned ON, the DC/DC converter 71 is electrically coupled to the battery coupler 53 through the first power delivery path L1. In response to the LDSW 69 turned OFF, the DC/DC converter 71 is electrically decoupled from the battery coupler 53.

The second power delivery path L2 is an electrical path configured to electrically couple the adapter coupler 52 and the control power supply 64 to each other. The second SW 62 is disposed on the second power delivery path L2 and completes or interrupts the second power delivery path L2 in response to the second SW 62 turned ON or OFF in accordance with a command from the charging control IC 63. In detail, in response to the second SW 62 turned ON, the adapter coupler 52 is electrically coupled to the control power supply 64 through the second power delivery path L2. In response to the second SW 62 turned OFF, the adapter coupler 52 is electrically decoupled from the control power supply 64 on the second power delivery path L2.

The third power delivery path L3 is an electrical path extending from the adapter coupler 52 to the charging control IC 63. In response to a device coupled to the adapter coupler 52 delivering the electric power to the adapter coupler 52, the electric power is delivered to the charging control IC 63.

The charging control IC 63 at least achieves the function of the sink, among the roles of the source and the sink in the USB-PD. The source delivers electric power to other USB devices. The sink receives a supply of electric power from other USB devices. The charging control IC 63 activates in response to receiving the second electric power PW2 through the adapter coupler 52. Since the charging control IC 63 activates before the negotiation, the power-supply voltage of the charging adapter 5 at the time is a default value. The charging control IC 63 determines whether to operate as the source or the sink based on the setting of the CC terminal of the adapter coupler 52 (in detail, the USB Type-C connector). Here, the charging control IC 63 operates as the sink that receives the electric power supply. The charging control IC 63 performs the negotiation with the power delivery control IC 36 of the power delivery adapter 3 through the adapter coupler 52. The power-supply voltage of the charging adapter 5 is switched to a voltage corresponding to the supply power determined by the negotiation. The charging control IC 63 may turn on the first SW 61 or the second SW 62 in accordance with the result of the negotiation and notify the MCU 68 of the result of the negotiation.

The control power supply 64 activates in response to receiving the second electric power PW2 through the first power delivery path L1 or the second power delivery path L2. The control power supply 64 converts the DC voltage of the second electric power PW2 into an operating voltage Vd of the MCU 68 and delivers the electric power to the MCU 68. The operating voltage Vd of the MCU 68 corresponds to a voltage required for the MCU 68 to operate. The operating voltage Vd may be 5 volts, for example. That is, the control power supply 64 converts the DC voltage of the second electric power PW2 into the operating voltage Vd to be delivered to the inside of the charging adapter 5.

The first BTIF 70 receives battery information through a communication with the battery pack 8 coupled to the battery coupler 53. The battery information includes a specification of the battery pack 8, a state of the battery pack 8, and the like. The first BTIF 70 transfers the battery information to the MCU 68. The first BTIF 70 is configured to monitor the state of the battery pack 8. The first BTIF 70 may include a protection function to forcibly turn off the LDSW 69 in response to receiving the battery information indicating the anomaly of the battery pack 8. In other words, the first BTIF 70 may switch the LDSW 69 to OFF (its interrupted state) in response to a predefined forced-off condition being satisfied. The forced-off condition may be satisfied in response to the battery pack 8 being anomalous. For example, it may be determined that the battery pack 8 is anomalous in response to the temperature of the battery pack 8 exceeding a predefined temperature threshold. The temperature threshold may be set to the upper limit of the temperature at which the battery pack 8 can operate properly. The first BTIF 70 may switch the LDSW 69 to ON (its conductive state) in response to the forced-off condition not being satisfied.

The LDSW 69 may be configured to be switched to OFF in response to the MCU 68 and/or the first BTIF 70 switching the LDSW 69 to OFF. The LDSW 69 may be configured to be switched to ON in response to both of the MCU 68 and the first BTIF 70 switching the LDSW 69 to ON.

In such a charging adapter 5, not only the MCU 68, but also the first BTIF 70 can switch the LDSW 69 to OFF. That is, even if some anomalies occur in the MCU 68, the first BTIF 70 can switch the LDSW 69 to OFF, thereby inhibiting the unnecessary electric power from being delivered to the battery pack 8.

The MCU 68 activates in response to receiving the power supply from the control power supply 64. The MCU 68 obtains various information from the charging control IC 63 and the first BTIF 70. The MCU 68 controls various parts of the charging adapter 5 in accordance with the information obtained. The MCU 68 informs the user of the state of the charger 1, the state of the battery pack 8 that is being charged, and the like through the notifier 54 in accordance with the information obtained.

The MCU 68 in the first embodiment is in the form of a microcontroller with a microcomputer. The MCU 68 includes a CPU 681 and a memory 682. In another embodiment, the MCU 68 may include, in place of or in addition to the microcomputer, a combination of electronic components such as discrete devices, may include an ASIC, may include an ASSP, may include a programmable logic device such as FPGA, or may include a combination thereof.

The memory 682 includes a semiconductor memory including a volatile memory and a non-volatile memory. The CPU 681 executes various programs stored in the memory 682 to thereby perform various processes.

The MCU 68 calculates the charging setting information Si including the control value Pc of the second electric power PW2 in response to the state of the battery pack 8. The control value Pc includes a setting value Pa for the voltage value and/or the electric current value of the second electric power PW2. In other words, the setting value Pa indicates a magnitude of the DC voltage to be output from the power delivery adapter 3 and/or a magnitude of the DC current to be output from the power delivery adapter 3. The charging control IC 63 transmits, to the power delivery adapter 3, the charging setting information Si received from the MCU 68.

### 2-1-4. Battery Pack

The battery pack 8 includes a second BTIF 81, a cell unit 83, and a pack coupler 85.

The second BTIF 81 transmits the battery information to the first BTIF 70 through a communication with the first BTIF 70 of the charging adapter 5. The second BTIF 81 is configured to detect the state of the battery pack 8. The state includes a charged state of the battery pack 8, an anomalous state of the battery pack 8, and the like.

The cell unit 83 includes a first battery cell 83a and a second battery cell 83b. The first battery cell 83a and the second battery cell 83b include rechargeable batteries. In the first embodiment, the first battery cell 83a is coupled in series with the second battery cell 83b. In another embodiment, the first battery cell 83a may be coupled in parallel with the second battery cell 83b. In another embodiment, the battery pack 8 may include at least one additional battery cell.

The pack coupler 85 is configured to be detachably coupled to the charger 1 (in detail, to the charging adapter 5, in more detail, to the battery coupler 53). The pack coupler 85 is configured to receive the second electric power PW2 from the charger 1 when the cell unit 83 is charged. The pack coupler 85 is configured to output a discharging electric power of the cell unit 83 when the cell unit 83 is discharged.

The pack coupler 85 includes a first pack terminal 85a and a second pack terminal 85b. The first pack terminal 85a is electrically coupled to the cell unit 83. The second pack terminal 85b is electrically coupled to the second BTIF 81. In response to the pack coupler 85 being coupled to the battery coupler 53, the first pack terminal 85a is electrically coupled to the first connection terminal 53a and the second pack terminal 85b is electrically coupled to the second connection terminal 53b.

The second pack terminal 85b may be configured to transmit information of the battery pack 8 to a job-site electric appliance (not shown) in response to the battery pack 8 being coupled to the job-site electric appliance. In detail, the second BTIF 81 may transmit the information of the battery pack 8 through the second pack terminal 85b by executing a communication process with the job-site electric appliance.

Note that the transmission of the information through the second pack terminal 85b may include the transmission through a digital communication and the transmission through an analog communication. The digital communication includes a serial communication and a parallel communication. In the digital communication, a digital value representing the information of the battery pack 8 is transmitted based on a predetermined communication protocol. In the analog communication, an analog value representing the information of the battery pack 8 is transmitted. The analog value may be a voltage value and an electric current value. For example, a thermistor configured to detect the temperature of the battery pack 8 may be used, and the value of the detected voltage generated across the thermistor may be used as the analog value representing the information of the battery pack 8. Specifically, the battery pack 8 may include the thermistor and the job-site electric appliance may include a pull-up resistor to form a circuit from a reference voltage line through the pull-up resistor and the thermistor to a ground line, thereby generating a detected voltage at a connection point between the pull-up resistor and the thermistor. In this case, a microcomputer provided in the job-site electric appliance receives the value (analog value) of the detected voltage, whereby the information of the battery pack 8 is transmitted to the job-site electric appliance.

### 2-1-5. Charging Process

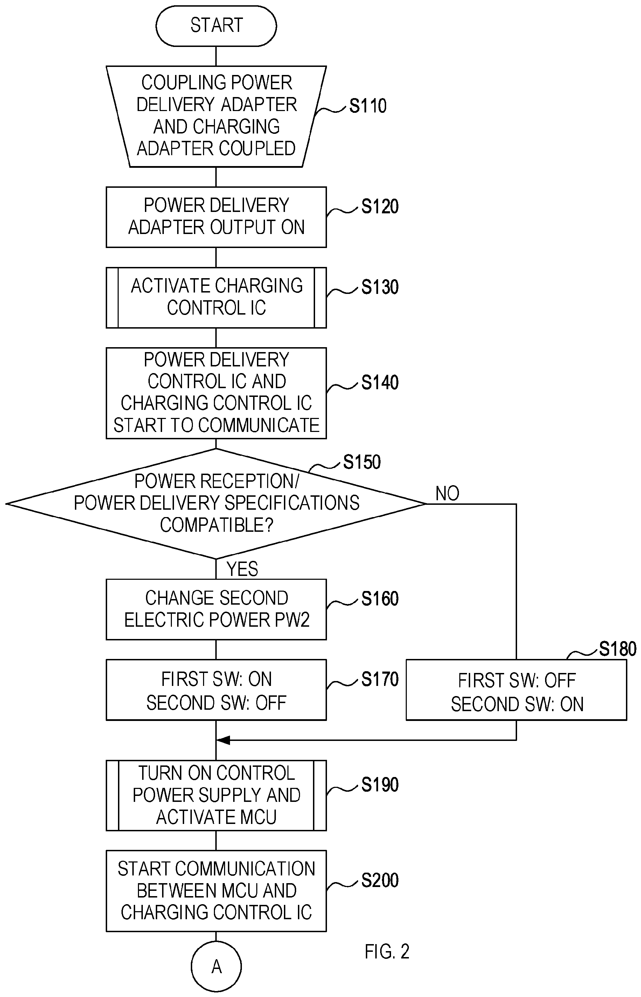

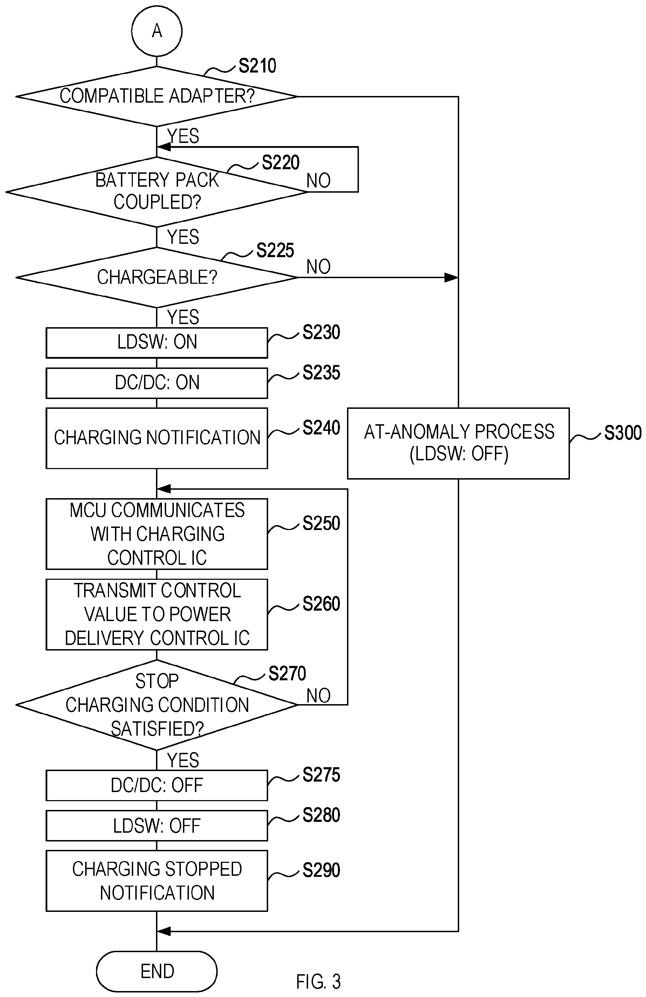

Then, a charging process for charging the battery pack 8 using the charger 1 (in detail, the power delivery adapter 3 and the charging adapter 5) is illustrated using the flowcharts of FIGS. 2 and 3.

First, in S110 (S represents a step), the power delivery adapter 3 and the charging adapter 5 are coupled by the user. In detail, the electric power outputter 33 and the adapter coupler 52 are coupled.

In the next S120, the power delivery adapter 3 initiates outputting the second electric power PW2 from the electric power outputter 33. That is, in response to the power delivery adapter 3 being coupled to the charging adapter 5, the power delivery adapter 3 outputs the second electric power PW2 to the charging adapter 5. At this time, since the negotiation between the power delivery adapter 3 and the charging adapter 5 (in detail, between the power delivery control IC 36 and the charging control IC 63) has not been performed, the voltage value of the second electric power PW2 is set to a default value. In the first embodiment, the default value is 5 volts.

In the next S130, the charging control IC 63 activates in response to the charging adapter 5 receiving the second electric power PW2. That is, the charging control IC 63 activates in response to receiving the second electric power PW2 from the power delivery adapter 3 through the third power delivery path L3. Each of the first SW 61, the second SW 62, and the LDSW 69 is in its OFF-state (its interrupted state) immediately after the activation of the charging control IC 63.

In the next S140, the power delivery control IC 36 and the charging control IC 63 start to communicate with each other. First, the power delivery control IC 36 and the charging control IC 63 perform the negotiation between each other in accordance with the USB-PD standard. The power delivery control IC 36 checks the CC terminal of the electric power outputter 33 to thereby confirm a power reception specification/power delivery specification of the power delivery adapter 3. The charging control IC 63 checks the CC terminal of the adapter coupler 52 to thereby confirm the power reception specification/power delivery specification of the charging adapter 5. That is, it is confirmed that which of the power delivery adapter 3 and the charging adapter 5 functions as the source to deliver the electric power and which of them functions as the sink to receive the supply of the electric power. In the first embodiment, the power delivery control IC 36 achieves the function of the source side, and the charging control IC 63 achieves the function of the sink side.

In the next S150, the power delivery control IC 36 and the charging control IC 63 determine whether the specifications of the power delivery control IC 36 and the charging control IC 63 are compatible with each other. The power delivery control IC 36 and the charging control IC 63 proceed to S160 if their specifications are compatible with each other (YES), and proceed to S180 if their specifications are incompatible with each other (NO). For example, when the power delivery adapter 3 and the charging adapter 5 both attempt to operate as the source or the sink, the power delivery control IC 36 and the charging control IC 63 determine that their specifications are incompatible. When the power delivery adapter 3 cannot meet the required power of the charging adapter 5 as a result of the negotiation, the charging control IC 63 determines that their specifications are incompatible. That is, the charging control IC 63 determines whether the power delivery adapter 3 is compatible with the charging adapter 5.

In the next S160, the power delivery control IC 36 and the charging control IC 63 vary the second electric power PW2 in accordance with the result of the negotiation. Specifically, the power delivery control IC 36 and the charging control IC 63 set the voltage value of the second electric power PW2 to correspond to a power-supply voltage value of the charging adapter 5. At this time, the voltage value of the second electric power PW2 may be set to a value that is equal to or greater than a default value. For example, the voltage value of the second electric power PW2 may be any of 5, 9, 12, 15, or 20 volts.

In S170, the charging control IC 63 switches the first SW 61 to ON. Furthermore, the charging control IC 63 switches the second SW 62 to OFF. That is, the charging control IC 63 initiates to deliver the second electric power PW2 to the control power supply 64 and the DC/DC converter 71 through the first power delivery path L1.

In S180, the charging control IC 63 switches the second SW 62 to ON. Furthermore, the charging control IC 63 switches the first SW 61 to OFF. That is, the charging control IC 63 initiates to deliver the second electric power PW2 to the control power supply 64 through the second power delivery path L2.

In the subsequent S190, the MCU 68 activates in response to the second electric power PW2 being delivered to the control power supply 64.

In the subsequent S200, communication between the MCU 68 and the charging control IC 63 is initiated.

In the subsequent S210, the MCU 68 determines whether the power delivery adapter 3 coupled to the adapter coupler 52 is compatible with the charging adapter 5. If the power delivery adapter 3 is compatible with the charging adapter 5 (YES), the MCU 68 proceeds to S220, and proceeds to S300 if the power delivery adapter 3 is incompatible with the charging adapter 5 (NO).

In S220, the MCU 68 determines whether the battery pack 8 is coupled to the battery coupler 53 through the first BTIF 70. The MCU 68 proceeds to S225 in response to the battery pack 8 being coupled to the battery coupler 53 (YES). In response to the battery pack 8 not being coupled to the battery coupler 53 (NO), the MCU 68 waits while repeating the same step.

In S225, the MCU 68 determines whether the battery pack 8 is chargeable by the power delivery adapter 3. The MCU 68 proceeds to S230 if it is chargeable (YES), and proceeds to S300 if it is unchargeable (NO). The MCU 68 determines whether the battery pack 8 is chargeable by comparing the electric power that can be delivered by the power delivery adapter 3 and the electric power required for charging the battery pack 8. In other words, the MCU 68 determines whether the power delivery adapter 3 is suitable for charging the battery pack 8. Note that the electric power that can be delivered by the power delivery adapter 3 may be determined by a voltage that can be output.

Note that in S225, the MCU 68 may determine whether the battery pack 8 is chargeable based on a temperature of the battery pack 8. For example, the MCU 68 may determine that the battery pack 8 is unchargeable in response to the temperature of the battery pack 8 exceeding a predefined temperature threshold. The MCU 68 may determine that the battery pack 8 is chargeable in response to the temperature of the battery pack 8 being lower than or equal to the temperature threshold. In other words, the MCU 68 may determine that the battery pack 8 is unchargeable in response to the battery pack 8 being in a high temperature state at a temperature exceeding the temperature threshold. The MCU 68 may determine that the battery pack 8 is chargeable in response to the battery pack 8 being in a proper state at a temperature lower than or equal to the temperature threshold.

Furthermore, in S225, the MCU 68 is not limited to a configuration in which it immediately determines whether the battery pack 8 is chargeable based on a single determination result, but may repeatedly determine whether the battery pack 8 is chargeable during a predefined waiting time. That is, when the MCU 68 determines that the battery pack 8 is unchargeable in a first determination, it may determine again whether the battery pack 8 is chargeable during the waiting time without immediately making a negative determination in S225. For example, when the temperature of the battery pack 8 exceeds the predefined temperature threshold in the first determination, the MCU 68 may determine again whether the temperature of the battery pack 8 exceeds the temperature threshold during the waiting time. Then, if the temperature of the battery pack 8 is equal to or lower than the temperature threshold, the MCU 68 may make a positive determination in S225. Note that the redetermination during the waiting time is not limited to once, and the redetermination may be performed two or more times. By performing two or more times of determinations in this way, the temperature of the battery pack 8 decreases and the state of the battery pack 8 shifts from the unchargeable high temperature state to the chargeable proper state, whereby the battery pack 8 can be charged.

The MCU 68 may vary the voltage value of the second electric power PW2 to a default value during the waiting time. In detail, the power delivery control IC 36 and the charging control IC 63 may vary the voltage value of the second electric power PW2 based on a command from the MCU 68. Thereafter, in response to the positive determination in S225, the MCU 68 may restore the voltage value of the second electric power PW2 to the value set in S160. This allows the voltage value of the second electric power PW2 to be lowered during the waiting time to thereby reduce unnecessary power consumption in the power delivery adapter 3.

The determination as to "whether the battery pack 8 is chargeable" in S225 may be determined based on whether the battery pack 8 is in its proper state or in its failure state. If the battery pack 8 is in its proper state, a positive determination (YES) may be made, and if the battery pack 8 is in its failure state, a negative determination (NO) may be made. The failure state at this time means a non-recoverable failure state. The non-recoverable failure state includes, for example, a disconnection failure within the battery pack 8, and the like. A temporary anomalous state, such as a high temperature anomaly in the battery pack 8, is not included in the non-recoverable failure state, because the recovery to the proper state is possible over time.

If the battery pack 8 is in the temporary anomalous state at the time of the determination in S225, the MCU 68 may wait until the temporary anomalous state is solved after the positive determination in S225 and before proceeding to S230 (i.e., before starting to charge the battery pack 8). For example, an anomaly determination step may be executed after the positive determination in S225 to determine whether the battery pack 8 is in the temporary anomalous state. In this anomaly determination step, if the battery pack 8 is in the temporary anomalous state, the MCU 68 may wait until the temporary anomalous state is solved by repeatedly executing this step, and if the battery pack 8 is not in the temporary anomalous state, the MCU 68 may proceed to S230. That is, when the battery pack 8 has an anomalous high temperature, the MCU 68 may wait, after the positive determination in S225, until the temperature of the battery pack 8 decreases to a proper range by repeating the negative determination in the anomaly determination step, and may proceed to S230 when the temperature of the battery pack 8 decreases to the proper range. When the battery pack 8 has the anomalous high temperature, the battery pack 8 may be actively cooled by a cooling fan or the like.

In S230, the MCU 68 switches the LDSW 69 to ON. This causes the DC/DC converter 71 and the battery coupler 53 to be electrically coupled to each other.

In the subsequent S235, the MCU 68 switches the DC/DC converter 71 from a disabled state (or a conversion stopped state) to an enabled state (or a conversion executing state). In the disabled state, the DC/DC converter 71 outputs the DC voltage of the second electric power PW2 without converting the DC voltage of the second electric power PW2 into the DC voltage of the charging electric power PWb. In the enabled state, the DC/DC converter 71 converts the DC voltage of the second electric power PW2 into the DC voltage of the charging electric power PWb and outputs the DC voltage of the charging electric power PWb. This causes the charging adapter 5 to output the DC voltage of the charging electric power PWb from the battery coupler 53. In this manner, the charging electric power PWb is delivered to the battery pack 8, whereby the charging of the battery pack 8 is initiated.

In the subsequent S240, the MCU 68 controls the notifier 54 to inform that the battery pack 8 is being charged. The notifier 54 may include, for example, a liquid crystal panel, an LED lamp, a speaker, a buzzer, or the like. The notification may be in the form of a text display, a lamp lighting, a voice notification, a sound output, or the like. For example, the notifier 54 may display a text "charging". Notifying that the battery pack 8 is being charged enables to also notify that the device (the power delivery adapter 3) coupled to the adapter coupler 52 is compatible with the charging adapter 5.

In S300, the MCU 68 executes an at-anomaly process. The at-anomaly process includes an anomaly alert process and a self-cessation process. The MCU 68 controls the notifier 54 so as to alarm an anomaly by executing the anomaly alert process. For example, the notifier 54 may display a text "anomaly". The general idea of "anomaly" here includes at least one of the incompatibility of the power delivery adapter or the incompatibility of the battery pack depending on the determination made in S210 or S225. The incompatibility of the power delivery adapter means that the device (the power delivery adapter 3) coupled to the adapter coupler 52 is not compatible with the charging adapter 5. The incompatibility of the battery pack means that the battery pack 8 coupled to the battery coupler 53 is not compatible with the charging adapter 5. In other words, the incompatibility of the battery pack also means that the battery pack 8 is not compatible with the second electric power PW2 output from the power delivery adapter 3.

In S300, the MCU 68 may further switch the LDSW 69 to OFF. In S300, the MCU 68 may further switch the DC/DC converter 71 from the enabled state to the disabled state.

The MCU 68 sets the DC voltage output by the power delivery adapter 3 to the minimum DC voltage (hereinafter, also referred to as "adapter minimum voltage Vamin") selectable in the power delivery adapter 3 by executing the self-cessation process. In detail, the MCU 68 calculates the charging setting information Si including the control value Pc that indicates the adapter minimum voltage Vamin, and transmits the charging setting information Si to the charging control IC 63. The charging control IC 63 transmits the charging setting information Si to the power delivery control IC 36. That is, the charging adapter 5 transmits, to the power delivery adapter 3, the control value Pc indicating the adapter minimum voltage Vamin. This causes the power delivery adapter 3 to output, to the charging adapter 5, the DC voltage corresponding to the adapter minimum voltage Vamin.

In the first embodiment, the minimum DC voltage selectable in the power delivery adapter 3 is 3.3 volts. The minimum operating voltage of the MCU 68 in the charging adapter 5 is 5.0 volts. Therefore, in response to the MCU 68 executing the self-cessation process, the DC voltage output by the power delivery adapter 3 (i.e., 3.3 volts) falls below the minimum operating voltage of the MCU 68 (i.e., 5.0 volts), making the MCU 68 inoperative. That is, the MCU 68 transitions the MCU 68 itself to its inoperative state by executing the self-cessation process. This enables to reduce an anomalous operation of the MCU 68, thereby inhibiting the charging of the battery pack 8 that is incompatible with the power delivery adapter 3.

Furthermore, with respect to the battery cells provided in the battery pack 8, when one battery cell has its maximum charging voltage greater than the adapter minimum voltage Vamin, the overcharge of the battery pack 8 can be inhibited by MCU 68 executing the self-cessation process. For example, when the maximum charging voltage of one battery cell is 4.2 volts and the adapter minimum voltage Vamin is 3.3 volts, the voltage value output by the charging adapter 5 to the battery pack 8 falls below the maximum charging voltage of one battery cell after the execution of the self-cessation process. Thus, even if the battery pack 8 is charged by the power delivery adapter 3 and the charging adapter 5 for some reason, only the DC voltage lower than the maximum charging voltage of one battery cell is applied, thereby inhibiting the overcharge of the battery pack 8.

In S250 following S240, the MCU 68 communicates with the charging control IC 63. First, the MCU 68 obtains the battery information of the battery pack 8 through the first BTIF 70. The MCU 68 determines the charged state of the battery pack 8 based on the battery information.

In the subsequent S260, the charging control IC 63 communicates with the power delivery control IC 36. The charging control IC 63 transmits the charging setting information Si to the power delivery control IC 36. In this way, the charging adapter 5 transmits, to the power delivery adapter 3, the control value Pc including the appropriate charging power.

In the subsequent S270, the MCU 68 determines whether a stop charging condition of the battery pack 8 is satisfied. First, the MCU 68 obtains the battery information of the battery pack 8 through the first BTIF 70. The MCU 68 determines whether the stop charging condition of the battery pack 8 is satisfied based on the battery information. Upon determination that the stop charging condition is satisfied (YES), the MCU 68 proceeds to S275 and upon determination that the stop charging condition is not satisfied (NO), it proceeds to S250 again.

The stop charging condition may be satisfied, for example, based on the battery pack 8 having been charged to 100% of a charging capacity of the battery pack 8. The stop charging condition may be satisfied based on the battery pack 8 being in its unchargeable anomalous state. The stop charging condition may be satisfied based on the battery pack 8 not being coupled to the battery coupler 53.

Note that the charging capacity is a value corresponding to a specified percentage of a rated capacity of the battery pack 8. The rated capacity of the battery pack 8 corresponds to the electric energy that can be stored in the battery pack 8 in its unused state (i.e., in a state where the battery cells of the battery pack 8 are not degraded). The battery pack 8 is degraded by repeated charging and discharging. The charging capacity corresponds to the electric energy that can be stored in the battery pack 8, and varies depending on the degraded state of the battery pack 8. The charging capacity is set to a value equal to or less than the rated capacity. For example, in the battery pack 8 with its rated capacity of 5.0 ampere-hours, the charging capacity may be set to 4.9 ampere-hours. In order to ensure a large number of permissible charge/discharge cycles until the battery pack 8 reaches the end of its life, the charging capacity may be set to a lower value. The permissible charge/discharge cycle is a cumulative number of charge/discharge cycles of the battery pack 8, and corresponds to the upper limit of the cumulative number of cycles within which the battery pack 8 can operate properly. The charging capacity may be changed based on the cumulative number of charge/discharge cycles. For example, if the cumulative number of charge/discharge cycles exceeds a specified reference value, the charging capacity may be changed to a lower value.

If it is determined that the battery pack 8 is in its anomalous state in S270, a process similar to the anomaly alert process may be executed in the steps executed thereafter.

By the charger 1 repeatedly executing the processes of S250 and S260, the MCU 68 varies the charging setting information Si based on the state of the battery pack 8 in response to (i) the charging adapter 5 delivering the DC voltage of the second electric power PW2 to the battery pack 8 and (ii) the state of the battery pack 8 being changed. For example, when some anomaly (error) occurs to the battery pack 8 at the time of charging the battery pack 8, the charging control IC 63 varies the charging setting information Si so as to reduce the electric energy delivered by the power delivery adapter 3. This reduces unnecessary power consumption.

In the subsequent S275, the MCU 68 switches the DC/DC converter 71 from the enabled state to the disabled state. This causes the charging adapter 5 to stop outputting the DC voltage of the charging electric power PWb from the battery coupler 53. The supply of the charging electric power PWb to the battery pack 8 is stopped in this manner to thereby cease the charging of the battery pack 8.

In S280, the MCU 68 switches the LDSW 69 to OFF. This electrically disconnects the DC/DC converter 71 and the battery coupler 53 from each other.

Alternatively, in S280, the charging control IC 63 and the MCU 68 may calculate the charging setting information Si to set the DC voltage of the second electric power PW2 to a default value, and may transmit the charging setting information Si to the power delivery control IC 36. In response to the charging control IC 63 transmitting this charging setting information Si to the power delivery control IC 36 through the adapter coupler 52, the power delivery control IC 36 controls the DC voltage of the second electric power PW2 to the default value. This allows the charger 1 to control the DC voltage of the second electric power PW2 to the minimum DC voltage to thereby reduce unnecessary power consumption.

In S290, the MCU 68 controls the notifier 54 so as to inform that the charging of the battery pack 8 is stopped. For example, the notifier 54 may display a text "charging stopped". Alternatively, when the charging is completed to 100% of the charging capacity of the battery pack 8, the notifier 54 may display a text "charging completed". When the battery pack 8 is in its anomalous state, the notifier 54 may display a text "battery pack anomaly".

The charger 1 terminates the charging process upon completion of the processes of S290 or S300.

In the charger 1 configured to execute the charging process in this way, the charging adapter 5 receives the second electric power PW2 from the power delivery adapter 3 in accordance with the USB-PD standard. The charging adapter 5 includes the DC/DC converter 71 that converts the DC voltage of the second electric power PW2 into the DC voltage of the charging electric power PWb, allowing the output of the charging voltage suitable for charging the battery pack 8.

### 2-1-6. Effects

The first embodiment detailed above exhibits the following first through seventh effects.
- First effect: In the charger 1, the charging adapter 5 can output the charging voltage (the DC voltage of the charging electric power PWb) suitable for charging the battery pack 8 by the DC/DC converter 71. With the charging voltage converted from the DC voltage, the charging adapter 5 can charge a battery pack that cannot be charged with the unconverted DC voltage.
- Second effect: It is possible to charge two or more types of battery packs 8 having distinct charging voltages by preparing two or more types of charging adapters 5 that output distinct charging voltages as the charging adapter 5 in the charger 1. In this case, different types of battery packs 8 can be charged by replacing the charging adapter 5, which is part of the charger 1, without replacing the entire charger 1.

Thus, preparing two or more types of charging adapters 5 according to the types of battery packs 8 reduces a burden associated with the preparation of the charger 1 compared to a case where two or more types of entire chargers are prepared according to the types of battery packs 8. The burden here includes both the financial and operational burdens required for the preparation of the charger 1. Thus, the charging adapter 5 can reduce the workload associated with the preparation of the charger 1 when two or more types of battery packs 8 are charged.
- Third effect: The charging adapter 5 switches the first switch 61 or the second switch 62 to its conductive state to thereby switch a transmission state of the DC voltage of the second electric power PW2 to the DC/DC converter 71 and the control power supply 64.

The charging adapter 5 transmits the DC voltage of the second electric power PW2 to both the DC/DC converter 71 and the control power supply 64 in response to the power delivery adapter 3 being compatible with the charging adapter 5. In response to the power delivery adapter 3 being incompatible with the charging adapter 5, the charging adapter 5 transmits the DC voltage of the second electric power PW2 to the control power supply 64 without transmitting the DC voltage of the second electric power PW2 to the DC/DC converter 71.

This allows the charging adapter 5 to cause the control power supply 64 to deliver electric power to the inside of the charging adapter 5 while reducing damage to the charging adapter 5 due to an inappropriate DC voltage. The charging adapter 5 can perform a specified notifying operation using the electric power delivered from the control power supply 64. For example, when the electric power delivered from the power delivery adapter 3 is insufficient as the electric energy required for the charging of the battery pack 8, the battery pack 8 cannot be charged. The charging adapter 5 can perform an operation to inform the user of such a situation that the battery pack 8 cannot be charged.
- Fourth effect: The charger 1 can output a charging voltage corresponding to a voltage value required for charging each of the two or more types of battery packs by selecting the charging adapter 5 according to the type of the battery pack 8. That is, the charger 1 can charge two or more types of battery packs 8 by replacing the charging adapter 5, without replacing the entire charger. Thus, the charger 1 can reduce the workload associated with the preparation of chargers when two or more types of battery packs 8 are charged.
- Fifth effect: In the charging adapter 5, the MCU 68 switches the LDSW 69 to its interrupted state in response to the power delivery adapter 3 not being suitable for charging the battery pack 8. Such a charging adapter 5 can inhibit the battery pack 8 from being charged by a power delivery adapter 3 that is not suitable for charging the battery pack 8. This allows the charging adapter 5 to inhibit the battery pack 8 from being damaged due to the use of the power delivery adapter 3 that is not suitable for charging.
- Sixth effect: In the charging adapter 5, the MCU 68 stops outputting the second electric power PW2 to the battery pack 8 in response to the stop charging condition being satisfied. This allows the charging adapter 5 to inhibit the battery pack 8 from being damaged due to a continuous output of the second electric power PW2 to the battery pack 8.
- Seventh effect: In the charging adapter 5, the MCU 68 calculates the charging setting information Si such that the DC voltage of the second electric power PW2 is controlled to the default value in response to the stop charging condition being satisfied. This allows the charger 1 to control the DC voltage of the second electric power PW2 to the minimum voltage to thereby reduce unnecessary power consumption.

### 2-1-7. Correspondence between Terms

In the first embodiment, the adapter coupler 52 corresponds to an example of the first coupler in the overview of embodiments, the DC/DC converter 71 corresponds to an example of the converter in the overview of embodiments, the enabled state corresponds to an example of the first state in the overview of embodiments, and the disabled state corresponds to an example of the second state in the overview of embodiments. The battery coupler 53 corresponds to an example of the second coupler in the overview of embodiments, and the first power delivery path L1 corresponds to an example of the power delivery path in the overview of embodiments. The first BTIF 70 corresponds to an example of the state monitoring circuit in the overview of embodiments, the MCU 68 corresponds to an example of the charging control circuit in the overview of embodiments, and the charging control IC 63 corresponds to an example of the communication circuit in the overview of embodiments. The charging setting information Si corresponds to an example of the first power delivery information in the overview of embodiments.

The LDSW 69 corresponds to an example of the path switch in the overview of embodiments, and the MCU 68 corresponds to an example of the switching control circuit in the overview of embodiments. The charging control IC 63 corresponds to an example of the starter circuit in the overview of embodiments. The electrical path extending from the node P1 to the control power delivery 64 on the first power delivery path L1 corresponds to an example of the first internal path in the overview of embodiments, and the second power delivery path L2 corresponds to an example of the second internal path in the overview of embodiments. The stop charging condition in S270 corresponds to an example of the first condition in the overview of embodiments.

The power delivery control IC 36 corresponds to an example of the power delivery control circuit in the overview of embodiments, and the AC/DC converter 35 corresponds to an example of the voltage generation circuit in the overview of embodiments. The second pack terminal 85b corresponds to an example of the output terminal in the overview of embodiments.

### 2-2. Second Embodiment

### 2-2-1. Overall Configuration

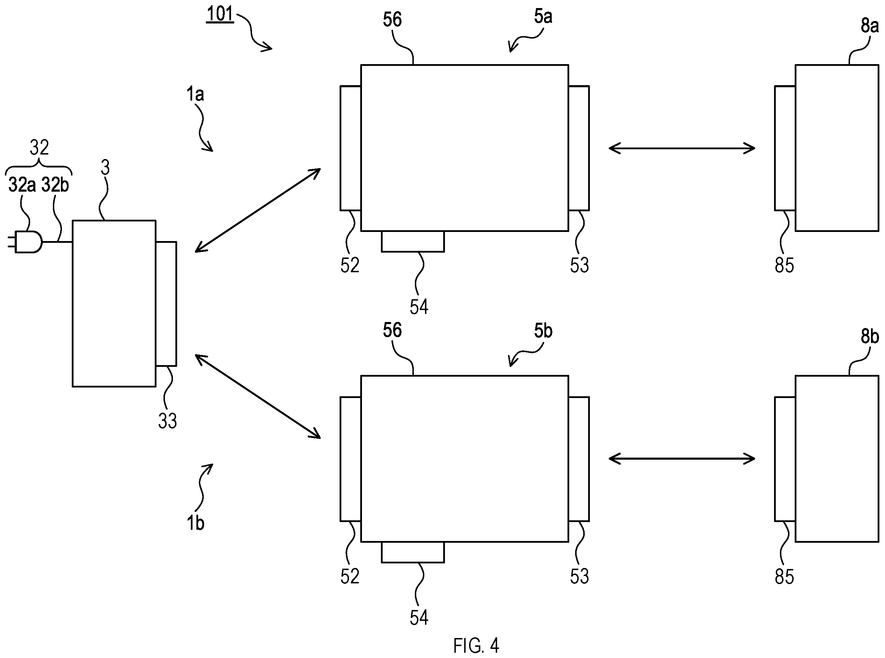

A charging system 101 of a second embodiment shown in FIG. 4 is configured to charge a first battery pack 8a and a second battery pack 8b.

The first battery pack 8a and the second battery pack 8b are respectively coupled to different types of job-site electric appliances. The first battery pack 8a and the second battery pack 8b each have a basic configuration similar to that of the battery pack 8 in the first embodiment. The first battery pack 8a and the second battery pack 8b each have a distinct DC voltage of the charging electric power PWb according to the type of job-site electric appliance to be coupled. The first battery pack 8a and the second battery pack 8b may each have a distinct attachment/detachment structure and a terminal shape of the battery coupler 53 according to the type of job-site electric appliance to be coupled. In the second embodiment, the appropriate charging voltage of the first battery pack 8a is 12.0 volts. The appropriate charging voltage of the second battery pack 8b is 42.0 volts. Note that these values of the appropriate charging voltages are only examples, and the values of the appropriate charging voltages in the present disclosure are not limited to these values. Any values may be adopted as the values of the appropriate charging voltages depending on conditions such as applications, operating environments, or the like.

The charging system 101 includes a first charger 1a and a second charger 1b. The first charger 1a and the second charger 1b each have a basic configuration similar to that of the charger 1 in the first embodiment. The first charger 1a and the second charger 1b charge different types of battery packs. The first charger 1a is configured to charge the first battery pack 8a. The second charger 1b is configured to charge the second battery pack 8b.

The first charger 1a includes a power delivery adapter 3 and a first charging adapter 5a. The power delivery adapter 3 is the same as the power delivery adapter 3 in the first embodiment. The first charging adapter 5a has a basic configuration similar to that of the charging adapter 5 in the first embodiment. The first charging adapter 5a is configured to be detachably coupled to the first battery pack 8a. The battery coupler 53 of the first charging adapter 5a is configured to be able to be detachably coupled to the pack coupler 85 of the first battery pack 8a. The DC voltage of the charging electric power PWb output by the first charging adapter 5a is 14.4 volts.

The second charger 1b includes a power delivery adapter 3 and a second charging adapter 5b. The power delivery adapter 3 is the same as the power delivery adapter 3 in the first embodiment. The second charging adapter 5b has a basic configuration similar to that of the charging adapter 5 in the first embodiment. The second charging adapter 5b is configured to be detachably coupled to the second battery pack 8b. The battery coupler 53 of the second charging adapter 5b is configured to be able to be detachably coupled to the pack coupler 85 of the second battery pack 8b. The DC voltage of the charging electric power PWb output by the second charging adapter 5b is 40.0 volts.

The power delivery adapter 3 is detachably coupled to each of the first charging adapter 5a and the second charging adapter 5b. The power delivery adapter 3 outputs a DC voltage corresponding to the charging setting information Si transmitted from either the first charging adapter 5a or the second charging adapter 5b that is coupled to the power delivery adapter 3.

### 2-2-2. Variation in charging voltage by replacing charging adapter

With the first charging adapter 5a coupled to the power delivery adapter 3 and forming the first charger 1a, the charging system 101 can output the charging voltage of 14.4 volts to thereby charge the first battery pack 8a. With the second charging adapter 5b coupled to the power delivery adapter 3 and forming the second charger 1b, the charging system 101 can output the charging voltage of 40.0 volts to thereby charge the second battery pack 8b.

That is, the charging system 101 can vary the charging voltage output from the charging system 101 by replacing the charging adapter coupled to the power delivery adapter 3 with either the first charging adapter 5a or the second charging adapter 5b.

### 2-2-3. Effect

The second embodiment detailed above exhibits the following eighth effect.
- Eighth effect: The charging system 101 can vary the charging voltage output from the charging system 101 to 14.4 volts or 40.0 volts by replacing the charging adapter in use with either the first charging adapter 5a or the second charging adapter 5b. Therefore, the charging system 101 can charge the first battery pack 8a compatible with the first charging adapter 5a and can charge the second battery pack 8b compatible with the second charging adapter 5b.

That is, the charging system 101 can charge the first battery pack 8a and the second battery pack 8b by replacing the first charging adapter 5a with the second charging adapter 5b, and vice versa, without replacing the entire charger. Thus, the charging system 101 can reduce the workload associated with the preparation of chargers when two or more types of battery packs are charged.

### 2-3. Further embodiments

Although the embodiments of the present disclosure have been described above, it should be appreciated that the present disclosure is not limited to the first and second embodiments and can be embodied in various forms.

The charging system 101 in the second embodiment includes the two charging adapters (the first charging adapter 5a and the second charging adapter 5b) as described above. However, the charging system of the present disclosure is not limited to such a configuration. The charging system of the present disclosure may include three or more charging adapters, each of which outputs a distinct charging voltage.

For example, the charging system of the present disclosure may include four charging adapters having maximum output charging voltages of 12.0 volts, 17.0 volts, 21.0 volts, and 42.0 volts, respectively. Such a charging system may include a single power delivery adapter. Such a charging system can output four different charging voltages by replacing the charging adapter coupled to the power delivery adapter.

The charging system of the present disclosure can increase the variations of charging voltage that can be output by increasing the variations of charging adapters.

The second coupler of the charging adapter may have a specific shape that corresponds to the magnitude of the charging voltage in the converter. Similarly, the pack coupler of the battery pack may have a specific shape that corresponds to the magnitude of the appropriate charging voltage. Furthermore, the second coupler may have a shape that is detachably coupled to a pack coupler of a battery pack whose appropriate charging voltage matches the charging voltage. In this case, the second coupler cannot be coupled to a pack coupler of a battery pack whose appropriate charging voltage does not match the charging voltage due to shape differences. As a result, the charging adapter cannot be coupled to the battery pack whose appropriate charging voltage does not match the charging voltage. This reduces troubles such as damage or charging failure of the battery pack caused by mismatched charging voltages.

In the first embodiment, as described above, the charging adapter 5 transmits the charging setting information Si to the power delivery adapter 3 in accordance with the USB-PD standard when the DC voltage of the second electric power PW2 of the power delivery adapter 3 is varied. However, the charging system of the present disclosure is not limited to such a configuration. In order to vary the DC voltage of the second electric power PW2, the charging system of the present disclosure may be configured such that the charging adapter and the power delivery adapter transmit/receive the charging setting information in accordance with any standard distinct from the USB-PD standard. The standard may be any standard in which the DC voltage output by the power delivery adapter can be varied by the charging adapter.

In the first embodiment, as described above, the charging adapter 5 notifies an alert such that the incompatibility of the power delivery adapter and the incompatibility of the battery pack are not distinguished as a form of the anomaly alert process (S300) of the at-anomaly process. However, the charging adapter of the present disclosure is not limited to such a configuration. The charging adapter of the present disclosure may notify an alert such that the incompatibility of the power delivery adapter and the incompatibility of the battery pack are distinguished. The charging adapter of the present disclosure may distinguish and notify anomalies by a text display such as "incompatible power delivery adapter" or "incompatible battery pack", for example. The charging adapter of the present disclosure may notify anomalies other than these anomalies.

In the first embodiment, as described above, the charging adapter 5 does not communicate with the power delivery adapter 3 when the charging of the battery pack 8 is completed (S270: YES). However, the charging adapter of the present disclosure is not limited to such a configuration. The charging adapter of the present disclosure may transmit, to a power delivery adapter, charging setting information including a control value of the electric power at the time of non-charging, upon completion of the charging of the battery pack. The electric power at the time of non-charging may correspond to the electric power required for the charging adapter to operate when the battery pack is not being charged. The voltage value of the electric power at the time of non-charging may be set to a default value. The default value may be the lowest voltage (e.g., 5 volts) of the selectable voltages defined in the USB-PD standard.

In order to achieve such a configuration in the first embodiment, the MCU 68 may transmit, to the charging control IC 63, a control value Pc including the electric power at the time of non-charging, upon completion of the charging of the battery pack 8. Subsequently, the charging control IC 63 may transmit, to the power delivery control IC 36, the charging setting information Si including the control value Pc. That is, when the charging of the battery pack 8 is completed, the charging adapter 5 may transmit, to the power delivery adapter 3, the charging setting information Si including the electric power at the time of non-charging.

In the first embodiment, as described above, the MCU 68 immediately determines in S270 whether the stop charging condition is satisfied based on a single determination result. However, the present disclosure is not limited to such a configuration. For example, in S270, the MCU 68 may repeatedly determine whether the stop charging condition is satisfied during a predefined temporary suspended period. That is, when determining that the stop charging condition is satisfied in the first determination, the MCU 68 does not necessarily make a positive determination immediately in S270, but may temporarily reduce the charging electric power PWb delivered to the battery pack 8 and then determine again whether the stop charging condition is satisfied during the temporary suspended period.

For example, when the temperature of the battery pack 8 exceeds a predefined temperature threshold in the first determination, the MCU 68 may determine that the stop charging condition is satisfied and may reduce the charging electric power PWb delivered to the battery pack 8. Thereafter, the MCU 68 may determine again whether the temperature of the battery pack 8 exceeds the temperature threshold during the temporary suspended period. At this time, if the temperature of the battery pack 8 is equal to or lower than the temperature threshold, the MCU 68 may determine that the stop charging condition is not satisfied and restore the charging electric power PWb delivered to the battery pack 8 to the original value and may make a negative determination in S270. Alternatively, if the temperature of the battery pack 8 exceeds the temperature threshold, the MCU 68 may determine that the stop charging condition is satisfied and may make a positive determination in S270.

The redetermination during the temporary suspended period is not limited to once, and the redetermination may be performed two or more times. By performing two or more times of determinations in this way, the temperature of the battery pack 8 decreases and the state of the battery pack 8 shifts from the unchargeable high temperature state to the chargeable proper state, whereby the battery pack 8 can be continuously charged.

The MCU 68 may vary the voltage value of the second electric power PW2 to a default value during the temporary suspended period. In detail, the power delivery control IC 36 and the charging control IC 63 may vary the voltage value of the second electric power PW2 in accordance with a command from the MCU 68. Thereafter, in response to the negative determination in S270, the MCU 68 may restore the voltage value of the second electric power PW2 to the value set in S160. This allows the voltage value of the second electric power PW2 to be reduced during the temporary suspended period to thereby reduce unnecessary power consumption in the power delivery adapter 3.

Two or more functions of one element in the aforementioned embodiments may be achieved by two or more elements, and one function of one element may be achieved by two or more elements. Furthermore, two or more functions of two or more elements may be achieved by one element, and one function achieved by two or more elements may be achieved by one element. A part of the configurations of the aforementioned embodiments may be omitted. Furthermore, at least part of the configurations of the aforementioned embodiments may be added to or replaced with another configuration of the above-described embodiments.

## Claims

1. A charging adapter comprising:
a first coupler configured (i) to be detachably coupled to a power delivery adapter and (ii) to receive a DC voltage from the power delivery adapter in accordance with a USB-PD standard;
a second coupler configured to be detachably coupled to a battery pack, the battery pack being configured to be detachably coupled to a job-site electric appliance;
a power delivery path configured to electrically couple the first coupler to the second coupler;
a converter (i) on the power delivery path and (ii) configured to be switched to a first state or a second state, the converter in the first state being configured (i) to receive the DC voltage from the power delivery adapter through the first coupler, (ii) to convert the DC voltage into a charging voltage for charging the battery pack, and (iii) to output the charging voltage to the second coupler, the converter in the second state being configured (i) to receive the DC voltage from the power delivery adapter through the first coupler and (ii) to output the DC voltage to the second coupler;
a communication circuit configured (i) to transmit first power delivery information to the power delivery adapter and (ii) to receive second power delivery information from the power delivery adapter, the first power delivery information indicating a required power delivery capability for the charging adapter, and the second power delivery information indicating an actual power delivery capability of the power delivery adapter;
a charging control circuit configured to perform a charging control of the battery pack based on a state of the battery pack coupled to the second coupler, the first power delivery information, and/or the second power delivery information, the charging control including switching the converter to the first state or to the second state;
a control power supply configured to convert the DC voltage into an internal voltage to be delivered to an inside of the charging adapter;
a first switch (i) between the first coupler and the converter on the power delivery path and (ii) configured to be switched to its conductive state or to its interrupted state, the first switch in its conductive state being configured to complete the power delivery path, the first switch in its interrupted state being configured to interrupt the power delivery path;
a first internal path (i) electrically coupled between the first switch and the converter on the power delivery path and (ii) configured to electrically couple the power delivery path to the control power supply;
a second internal path configured to electrically couple the first coupler to the control power supply;
a second switch (i) on the second internal path and (ii) configured to be switched to its conductive state and its interrupted state, the second switch in its conductive state being configured to complete the second internal path, the second switch in its interrupted state being configured to interrupt the second internal path; and
a starter circuit configured to switch the first switch or the second switch to its conductive state based on the first coupler being coupled to the power delivery adapter.

2. The charging adapter according to claim 1,
wherein the starter circuit is configured to:
switch the first switch to its conductive state and switch the second switch to its interrupted state based on the power delivery adapter being compatible with the charging adapter, and
switch the first switch to its interrupted state and switch the second switch to its conductive state based on the power delivery adapter being incompatible with the charging adapter.

3. The charging adapter according to claim 1 or 2,
wherein the first power delivery information includes a magnitude of the DC voltage and/or a magnitude of an electric current to be output from the power delivery adapter.

4. The charging adapter according to any one of claims 1 through 3, comprising:
a path switch (i) between the converter and the second coupler on the power delivery path and (ii) configured to be switched to its conductive state or its interrupted state, the path switch in its conductive state being configured to complete the power delivery path, the path switch in its interrupted state being configured to interrupt the power delivery path;
a switching control circuit configured (i) to switch the path switch to its conductive state based on a first switching condition being satisfied, and (ii) to switch the path switch to its interrupted state based on a second switching condition being satisfied, the first switching condition being satisfied in response to (i) the actual power delivery capability of the power delivery adapter coupled to the first coupler fulfilling the required power delivery capability and (ii) the battery pack coupled to the second coupler being chargeable, the second switching condition being satisfied in response to (i) the actual power delivery capability of the power delivery adapter coupled to the first coupler not fulfilling the required power delivery capability and/or (ii) the battery pack coupled to the second coupler being unchargeable.

5. The charging adapter according to claim 4, further comprising
a state monitoring circuit configured to monitor a state of the battery pack.

6. The charging adapter according to claim 5, wherein:
the state monitoring circuit is configured (i) to switch the path switch to its interrupted state based on a forced-off condition predefined being satisfied and (ii) to switch the path switch to its conductive state based on the forced-off condition not being satisfied, and
the path switch is configured (i) to be switched to its interrupted state in response to the switching control circuit and/or the state monitoring circuit having switched the path switch to its interrupted state and (ii) to be switched to its conductive state in response to both the switching control circuit and the state monitoring circuit having switched the path switch to its conductive state.

7. The charging adapter according to any one of claims 4 through 6,
wherein the switching control circuit is configured to switch the path switch to its interrupted state based on a first condition being satisfied.

8. The charging adapter according to claim 7,
wherein the first condition is satisfied in response to the battery pack having been charged to 100% of a charging capacity of the battery pack or the battery pack being unchargeable.

9. The charging adapter according to claim 7 or 8,
wherein the charging control circuit is configured to set, based on the first condition being satisfied, the first power delivery information such that the DC voltage reaches a minimum DC voltage selectable in the power delivery adapter.

10. The charging adapter according to any one of claims 7 through 9,
wherein the charging control circuit is configured to set, based on the battery pack not being coupled to the second coupler, the first power delivery information such that the DC voltage reaches a minimum DC voltage selectable in the power delivery adapter.

11. The charging adapter according to any one of claims 1 through 10,
wherein the charging control circuit is configured to perform the charging control in accordance with the state of the battery pack, based on (i) the charging adapter delivering the charging voltage to the battery pack and (ii) the state of the battery pack having changed.

12. The charging adapter according to any one of claims 1 through 11,
wherein the first coupler is in the form of a USB Type-C connector.

13. The charging adapter according to any one of claims 1 through 12,
wherein the battery pack includes:
an output terminal configured to transmit information of the battery pack to the job-site electric appliance, and/or
a first battery cell and a second battery cell coupled in series or in parallel with each other.

14. A charger comprising:
the charging adapter according to any one of claims 1 through 13; and
a power delivery adapter configured (i) to be detachably coupled to the charging adapter, (ii) to receive the first power delivery information from the charging adapter, and (iii) to output the DC voltage corresponding to the required power delivery capability indicated by the first power delivery information.

15. The charger according to claim 14,
wherein the power delivery adapter includes:
a voltage generation circuit configured to generate the DC voltage;
a power delivery control circuit configured (i) to receive the first power delivery information transmitted from the charging adapter and (ii) to control the voltage generation circuit so as to generate the DC voltage corresponding to the required power delivery capability indicated by the first power delivery information; and
a voltage output circuit configured (i) to be detachably coupled to the first coupler of the charging adapter and (ii) to output the DC voltage.

16. A charging system comprising:
a first charging adapter (i) including the charging adapter according to any one of claims 1 through 13 and (ii) configured to output a first charging voltage for charging a first battery pack;
a second charging adapter (i) including the charging adapter according to any one of claims 1 through 13, (ii) distinct from the first charging adapter, and (iii) configured to output a second charging voltage for charging a second battery pack, the second charging voltage being distinct from the first charging voltage; and
a power delivery adapter configured (i) to be coupled alternatively to the first charging adapter or the second charging adapter, (ii) to receive the first power delivery information from either the first charging adapter or the second charging adapter that is coupled to the power delivery adapter, and (iii) to output, to either the first charging adapter or the second charging adapter that is coupled to the power delivery adapter, a DC voltage corresponding to the required power delivery capability indicated by the first power delivery information received.

17. A method for charging a battery pack, comprising:
electrically coupling the battery pack to a power delivery adapter through a charging adapter;
delivering a DC voltage from the power delivery adapter to the charging adapter in accordance with a USB-PD standard, the charging adapter including a converter configured to be switched to a first state or a second state, the converter in the first state being configured (i) to convert the DC voltage into a charging voltage for charging the battery pack and (ii) to output the charging voltage to the battery pack, the converter in the second state being configured to output the DC voltage to the battery pack;
transmitting first power delivery information from the charging adapter to the power delivery adapter, the first power delivery information indicating a required power delivery capability for the charging adapter;
transmitting second power delivery information from the power delivery adapter to the charging adapter, the second power delivery information indicating an actual power delivery capability of the power delivery adapter; and
switching the converter to the first state or the second state based on a state of the battery pack, the first power delivery information, and/or the second power delivery information.
